# EUROPEAN PATENT SPECIFICATION

(11) **EP 2 334 741 B1**
(45) Date of publication and mention of the grant of the patent: **13.11.2013**
(21) Application number: 09791059.0
(22) Date of filing: 31.07.2009
(51) Int. Cl.: C09D 11/16

(54) **WASHABLE INK COMPOSITIONS AND WRITING INSTRUMENTS COMPRISING SAME**
AUSWASCHBARE TINTENZUSAMMENSETZUNGEN UND SCHREIBINSTRUMENTE DAMIT
COMPOSITIONS D ENCRES LAVABLES ET INSTRUMENTS D ÉCRITURE LES COMPRENANT

(30) Priority: 11.09.2008 US 209066
(43) Date of publication of application: 22.06.2011
(73) Proprietor: Sanford, L. P., Oak Brook, Illinois 60523 (US)
(72) Inventor: ONYENEMEZU, Clement, N., Crest Hill IL 60435 (US)
(74) Representative: Style, Kelda Camilla Karen
(86) International application number: PCT/US2009/052430
(87) International publication number: WO 2010/030451

(56) References cited:
- EP-A- 0 209 367
- EP-A- 0 860 483
- WO-A-98/36031

## Description

### BACKGROUND OF THE INVENTION

### Field of the Invention

The disclosure is generally related to washable ink compositions and writing instruments containing the same. More particularly, the disclosure is related to washable ink compositions including a pigment capsule having at least one colorant contained therein.

### Brief Description of Related Technology

Washability from clothing and other items made from fabrics is a highly desirable attribute for ink compositions. Unfortunately, many commercially available markers include ink compositions that are not washable from a variety of fabrics and thus can leave enduring stains on clothing and other items made from fabrics.

In particular, the washability of commercially available dry-erase whiteboard marker ink compositions is inadequate. Furthermore, the ink compositions of commercially available washable, dry-erase whiteboard markers generally lack professional quality. For example, many commercially available dry-erase markers contain ink compositions which produce written markings having weak color intensity (e.g., the observed color of the written markings appears pastel). Additionally, many of such ink compositions take a significant amount of time to dry on whiteboards. Thus, although the ink compositions of such dry-erase whiteboard markers may be washable from at least certain, selected fabrics, the performance quality of such markers is poor and thus the markers are typically more suited for use by children.

Other commercially available washable, dry-erase whiteboard marker ink compositions are capable of being erased from certain, selected whiteboards such as melamine whiteboards and/or other polymer whiteboards, but do not easily erase from the writing surfaces of higher-end whiteboards (for example, such as the whiteboards comprising porcelain writing surfaces which are commonly found in classrooms, offices, and conference rooms). Consequently, many dry-erase markers can leave significant stains (color) on higher-end whiteboards (after erasing).

### SUMMARY OF THE INVENTION

In a first embodiment, the disclosure provides a washable ink composition having a pigment capsule comprising a polymer matrix formed of a resin selected from the group consisting of aminoplast resins, epoxy resins, and combinations thereof, and at least one colorant contained in the polymer matrix; and, at least one washing aid having at least four ethylene oxide units per molecule of washing aid.

In a second embodiment, the disclosure provides a washable ink composition having a pigment capsule comprising a polymer matrix formed of a resin selected from the group consisting of aminoplast resins, epoxy resins, and combinations thereof, and at least one colorant contained in the polymer matrix; and, at least one washing aid having a hydrophilic-lipophilic balance (HLB) value of at least 12.

In yet another embodiment, the washable ink composition according to either the first or second embodiments further includes a release agent in an amount sufficient to provide a washable, dry-erase ink composition.

In a further embodiment, the disclosure provides a writing instrument, such as, for example, a marker, containing a washable ink composition according to either the first or second embodiments of the disclosure, said ink composition optionally further comprising a release agent.

In still another embodiment, the disclosure provides a dry-erase whiteboard having a written marking formed from the washable, dry-erase ink composition according to either the first or second embodiments of the disclosure, said ink composition further comprising a release agent.

In yet another embodiment, the disclosure provides a method of erasing a written marking comprising making a marking on a dry-erase substrate with a washable, dry-erase ink composition according to either the first or second embodiments of the disclosure, said ink composition further comprising a release agent, and erasing said marking.

### DETAILED DESCRIPTION OF THE INVENTION

The ink compositions of the disclosure have one or more advantages, such as, for example, being substantially or even completely washable from clothing. Accordingly, the disclosed ink compositions can be substantially or even completely removed from a variety of fabrics, i.e., the markings can be removed from a variety of fabrics without leaving a visible stain or marking. Additionally, when the ink compositions further comprise a release agent, the disclosed ink compositions provide professional quality, dry-erase ink compositions that are both substantially washable from a variety of fabrics and easily erased from a variety of whiteboard surfaces.

Without intending to be bound by theory, it is believed that the surprising improvement in washability of the ink compositions from a variety of different fabrics is attributable to properties that result from the surface characteristics of the materials selected for the polymer matrix (e.g., the surface characteristics of the exterior surfaces of the pigment capsules themselves) in combination with a washing aid having at least four ethylene oxide units (preferably consecutive repeat units) per molecule of washing aid and/or a hydrophilic-lipophilic balance ("HLB") value of at least 12. Specifically, it is believed that the pigment capsules according to the disclosure do not have significant affinity for many fabrics because they generally lack functional groups to bind/interact with potential binding sites on the fabrics. The selected washing aids associate with the exterior surfaces of the pigment capsules via their hydrophobic portions to thereby prevent any direct "staining" interactions between the pigment capsules and any potential binding sites on the fabrics. Staining interactions with any potential binding sites on the fabrics are effectively prevented and/or capable of being washed away because the hydrophilic portions of the washing aids continue to be accessible to solvents and/or solutions such that the entire pigment capsule/surfactant assembly can be easily dissolved and/or dispersed by water or aqueous solutions. Accordingly, the combination of the selected pigment capsules and surfactants provides the improved washability of the disclosed ink compositions.

One aspect of the disclosure is a washable ink composition that includes a pigment capsule comprising a polymer matrix formed from a resin selected from the group consisting of aminoplast resins, epoxy resins, and combinations thereof, and at least one colorant contained therein (e.g., dissolved and/or dispersed within the polymer matrix); and at least one washing aid having at least four ethylene oxide units per molecule of washing aid and/or a HLB value of at least 12.

Another aspect of the disclosure is a writing instrument containing a washable ink composition as described herein.

In a further aspect, the washable ink compositions described herein further include a release agent to provide washable, dry-erase ink compositions.

Yet another aspect of the invention relates to a writing instrument containing such washable, dry-erase ink compositions.

A still further aspect of the invention relates to a dry-erase whiteboard having a written marking formed from (or including) such washable, dry-erase ink compositions.

In yet another aspect, the disclosure provides a method of erasing a written marking comprising making a marking on a dry-erase substrate with the washable, dry-erase ink compositions disclosed herein, and erasing said marking.

### Pigment Capsule

The pigment capsule comprises a polymer matrix containing at least one colorant therein. Typically, the colorant is a dye, but pigments could also be used.

The pigment capsules are generally formed by dispersing, dissolving, or otherwise distributing at least one colorant in the polymer matrix. The pigment capsules can be formed as is known in the art, for example, by emulsifying an aminoplast resin and/or an epoxy resin, adding a curing agent to the emulsion, and then polymerizing the resultant mixture. *See,* for example, U.S. Patent Nos. 2,498,592; 3,915,884; 5,869,184. The colorant(s) can be added at any suitable time, such as, for example, during formation of the resin, after formation of the resin, or after the resin has been emulsified.

The polymer matrix comprises an aminoplast resin and/or an epoxy resin. The aminoplast resin can be obtained by reacting an aminoplast crosslinker with an aldehyde. Additional monomeric repeat units, particularly ones comprising relatively polar groups, such as, for example, (1) sulfonamides including but not limited to toluene sulfonamides, benzene sulfonamides, and alkyl sulfonamides; (2) carboxylic acids, carboxylates, or derivatives thereof (such as esters) including but not limited to acrylic acids and acrylates such as butyl acrylate, 2-ethylhexyl acrylate, ethyl acrylate, and methacrylates, and (3) nitriles including but not limited to acrylonitriles, can be excluded from the reaction mixture.

Examples of suitable aminoplast resins include, but are not limited to, urea-formaldehyde, melamine formaldehyde, benzoguanamine formaldehyde, and alkyl-and aryl-substituted derivatives thereof, such as methyl urea-formaldehyde, phenyl urea-formaldehyde, 6-methyl-2,4-diamino-1,3,5-triazine formaldehyde, 2,4,6-trimethyltriamine-1,3,5-triazine formaldehyde, and the like. Other suitable examples include the condensation products of urea, melamine, annaline, ammeline, guanidine, dicyandiamidine, and benzoguanamine with aldehydes such as, acrolein, butyraldehyde, formaldehyde, paraformaldehyde, methylhemiformal, butylhemiformal, formaldehyde sodium bisulfite adduct, glyoxal, acetaldehyde, benzaldehyde, furfural, phthalaldehyde, and terephthaldehyde.

Suitable epoxy resins include, for example, the digylcidyl ether of bisphenol A and its homologues, glycidyl ethers of glycerol, glycidyl ethers of bisphenol F, gylcidyl ethers of tretrakis (hydroxyl phenyl) ethane, and epoxylated novolacs. *See,* for example, U.S. Patent No. 3,915,884.

Preferred resins include formaldehyde resins such as urea formaldehyde resins and melamine formaldehyde resins, benzoguanamine resins, and epoxy resins.

Other suitable polymer matrices include polystyrene, polybutadiene-modified polystyrene, polycarbonate, polyvinyl chloride, and polyamide. *See* U.S. Patent Nos. 5,714,090 and 5,740,502.

Generally, any dye can be used as the colorant in the polymer matrix as the washability of the ink compositions is believed to be derived from the combination of the surface characteristics attributable to the selected polymer matrix and the selected washing aid(s), as described herein. Suitable dyes for use as the colorant include, but are not limited to basic dyes, acid dyes, solvent dyes, fluorescent dyes, direct dyes, or other dyes compatible with the polymer matrix. Xanthene dyes, coumarin dyes, benzoxanthene dyes, naphthalimide dyes, benzothioxanthene dyes, and acridine dyes can be used. Examples of specific dyes include, Food Red No. 40, Food Blue No. 1, Food Yellow No. 7, and the like; FD & C dyes; Direct Blue dyes (Nos. 1, 6, 8, 14, 15, 25, 71, 76, 78, 80, 86, 90, 106, 108, 123, 163, 165, 199, 226, and the like); Direct Red dyes (Nos. 1, 2, 16, 23, 24, 28, 39, 62, 72, 227, 236, and the like); Direct Yellow dyes (Nos. 4, 11, 12, 27, 28, 33, 34, 39, 50, 58, 86, 100, 106, 107, 118, 127, 132, 142, 157, and the like); anthraquinone dyes; monoazo dyes; disazo dyes; phthalocyanine derivatives, including, for example, various phthalocyanine sulfonate salts; aza annulenes; formazan copper complexes; triphenodioxazines; Bernacid Red 2BMN; Pontamine^{®} dyes such as Pontamine^{®} Brilliant Bond Blue A; Cibacron Brilliant Red 38-A (i.e., Reactive Red 4) (Aldrich Chemical); Drimarene Brilliant Red X-2B (*i.e.,* Reactive Red 56) (Pylam, Inc.); Levafix^{®} Brilliant Red E-4B (Mobay Chemical, Haledon, New Jersey); Levafix^{®} Brilliant Red E-6BA (Mobay Chemical); Procion^{®} Red H8B (*i.e.,* Reactive Red 31) (ICI America); Direct Brilliant Pink B Ground Crude, (Crompton & Knowles); Cartasol Yellow GTF Presscake (Sandoz, Inc.); Cartasol Yellow GTF Liquid Special 110 (Sandoz, Inc.); Yellow Shade 16948 (Tricon); Basacid Black X34 (i.e., BASF X-34) (BASF); Carta Black 2GT (Sandoz, Inc.); Neozapon Red 492 (BASF); Orasol Red G (Ciba-Geigy); Direct Brilliant Pink B (Crompton-Knowles); Aizen Spilon Red C-BH (Hodogaya Chemical Company); Kayanol Red 3BL (Nippon Kayaku Company); Levanol Brilliant Red 3BW (Mobay Chemical Company); Levaderm Lemon Yellow (Mobay Chemical Company); Spirit Fast Yellow 3G; Aizen Spilon Yellow C-GNH (Hodogaya Chemical Company); Sirius Supra Yellow GD 167; Cartasol Brilliant Yellow 4GF (Sandoz, Inc.); Pergasol Yellow CGP (Ciba-Geigy); Orasol Black RL (Ciba-Geigy); Orasol Black RLP (Ciba-Geigy); Savinyl Black RLS (Sandoz); Dermacarbon 2GT (Sandoz); Pyrazol Black BG (ICI); Morfast Black Concentrate A (Morton-Thiokol); Diazol Black RN Quad (ICI); Orasol Blue GN (Ciba-Geigy); Savinyl Blue GLS (Sandoz, Inc.); Luxol Blue MBSN (Morton-Thiokol); Sevron Blue 5GMF (ICI); Basacid Blue 750 (BASF); Bemacid Red (Berncolors, Poughkeepsie, N.Y.); Berncolor A.Y. 34; Telon Fast Yellow 4GL-175; BASF Basacid Black SE 0228; various Reactive dyes, including Reactive Black dyes, Reactive Blue dyes, Reactive Red dyes such as Reactive red 180 and the like, Reactive Yellow dyes including Reactive yellow 37 and the like; and mixtures thereof.

Polymeric dyes also are suitable for use as the colorant in the washable ink composition. Representative examples include, but are not limited to, the polymeric dyes produced by Milliken Corporation (Spartanburg, SC) in the Palmer dye product line.

Generally, any pigment can be used as the colorant in the polymer matrix as the washability of the ink compositions is believed to be derived from the combination of the surface characteristics attributable to the selected polymer matrix and the selected washing aid(s), as described herein. Suitable pigments include, but are not limited to, organic pigments, inorganic pigments, and pigment precursors. Representative pigments for use in the ink compositions of the disclosure include but are not limited to phthalocyanine pigments, quinacridone pigments, benzimidazolone pigments, beta-naphthol pigments, carbon black pigments. Specific pigments include but are not limited to titanium dioxide, zinc oxide, calcium carbonate, lead white (lead carbonate), barium sulfate, iron blue, cobalt blue, ultramarine blue, black iron oxide (Iron (II, III) oxide), logwood, brown iron oxide, cadmium red, red iron oxide, cadmium yellow (CdS, CdZnS), curcuma yellow, yellow iron oxide, green chromate oxide, malachite, ferrocyanides, ferricyanides, manganese violet (manganese ammonium pyrophosphate), various aluminum salts and so on. Pigment precursors like those described in U.S. Patent No. 6,524,382 are also applicable in this application.

The pigment capsule can be included in an ink composition in a range of 1 wt.% to 40 wt.%, preferably 4 wt.% to 30 wt.%, and/or most preferably 7 wt.% to 20 wt.%. Suitable, commercially available pigment capsules include Dermaglo™ DGS pigments (DayGlo Color Corp., Cleveland, OH), Radiant^{®} MP-series pigments (DayGlo Color Corp.), and Panax-FB pigments (United Mineral & Chemical Corp., Lyndhurst, NJ ), and Panax-UFB fluorescent pigments (United Mineral & Chemical Corp.).

### Washing Aid

In one embodiment, the disclosed ink compositions include at least one washing aid having at least 4 ethylene oxide units, at least 8 ethylene oxide units, at least 20 ethylene oxide units, and/or at least 30 ethylene oxide units, per molecule of washing aid. Such washing aids typically have a HLB value of at least 6, a HLB value of at least 8, a HLB value of at least 10, and/or a HLB value of at least 12, for example, the washing aids can have a HLB value between 6 and 19. Thus, high polarity washing aids with HLB values of at least 6, such as alkyl sulfonates and amine alkyl oxides, are suitable.

When at least one washing aid used in the ink composition does not include at least 4 ethylene oxide units per molecule of washing aid, at least one washing aid contained in the ink composition typically has a HLB value of at least 12, for example, between 12 and 19.

The requisite washing aid can be ionic or nonionic. Suitable washing aids include octylphenol ethoxylate derivatives, such as Triton^{®} X-100, Triton^{®} X-305, and Triton^{®} X-705 (Dow Chemical Co.); and ethoxylated aliphatic amines, such as Ethofat^{®} 242/25 (Akzo Nobel). Other suitable washing aids include other alkylphenol ethoxylate derivatives, fatty alcohol ethoxylates, fatty acid ethoxylate, and polyethylene glycols. The requisite washing aid can be included in the ink composition in a range of 0.5 wt.% to 20 wt.%, 1 wt.% to 20 wt.%, 2 wt.% to 15 wt.%, and/or 4 wt.% to 10 wt.%.

Other washing aids or surfactants in addition to the at least one washing aid having at least four ethylene oxide units per molecule of washing aid and/or a HLB value of at least 12 may also be included, as explained in further detail below.

### Release Agent

If a dry-erase formulation is desired, a release agent can be included. After application, a release agent typically migrates from the ink composition to the surface of the whiteboard and thereby forms a film between the whiteboard surface and the ink composition to facilitate removal of the ink composition from the whiteboard surface. Other suitable release agents include, but are not limited to, isononyl octanoate, butyl oleate, decyl oleate, butyl stearate, ethylhexyl palmitate, dioctyl adipate, dioctyl sebacate, polyalkylene oxide-modified polydimethylsiloxanes, such as Silwet^{®} L-7606 (GE Silicones) and Tegowet^{®} 405 and Tegowet^{®} 440 (Degussa), polyoxyethylene glycol esters, such as Lipocol^{®} L-4 and Lipopeg^{®} 4L (Lipo Chemicals Inc.), hexylene glycol (Ashland Inc.). The release agent can be included in the ink composition in a range of 2 wt.% to 20 wt.% and/or 5 wt.% to 15 wt.%.

### Solvent

The washable ink compositions also include at least one solvent. Suitable solvents include, but are not limited to, alcohols, deionized water, aromatic compounds, and ketones. For example, the solvent can include methanol, ethanol, propanol, butanol, phenols, butanone, acetone, morpholine 2-pyrrolidine, N-methylpyrrolidinone, dimethylacetamide, dimethylformamide, dimethylsulfoxide, formamide, cyclohexylpyrrolidone, thiodiethanol, thiodiglyercol, sulfolane, propylene carbonate, ethylene carbonate, glycerol, formamide, dimethylformamide, and N-methylpyrrolidinone. Nontoxic solvents, such as ethanol and deionoized water, are preferred. The solvent can be included in the ink composition in a range of 10 wt.% to 90 wt.%, 20 wt.% to 80 wt.%; and/or 30 wt.% to 70 wt.%.

### Binder

The washable ink composition can further include a water-soluble binder to increase the ability of written marks formed from the ink compositions to remain coherent and adhered to the substrate over time. Suitable binders include, but are not limited to, polyvinylpyrrolidone (PVP) and its derivatives, polyvinyl alcohol, polyvinyl acetals, polyacrylic acid and its derivatives, styrene-malaic anhydride polymer, and methyl cellulose and its derivatives. The binder can be included in the ink composition in a range of 1 wt.% to 30 wt.%, 2 wt.% to 20 wt. %, and/or about 3 wet. % to 10 wt. %.

### Writing Instruments

Suitable writing instruments to deliver the washable ink composition include, but are not limited to, markers, such as, for example, capillary action markers, valve action markers, and the like. Capillary action markers generally include a reservoir for storing the washable ink composition coupled to and in fluid communication with a porous nib. The capillary action marker includes a porous reservoir for storing the washable ink composition joined in capillary coupling relation to a porous nib. Both capillary action markers and valve action markers are known. Suitable capillary action markers are described in U.S. Patent No. 7,364,614.

### Viscosity

The viscosity of the ink compositions at about 25°C is usually between one centipoises and twenty five centipoises (cps), for example, between one cps and twenty cps, between one cps to fifteen cps, and/or between five cps and fifteen cps. However, the ranges provided above can shift higher or lower, depending on the nature and porosity of the nibs and/or the fiber density of the ink reservoirs (if employed).

### Additives

The ink may optionally contain other additives such as, for example, biocide(s), surface tension modifier(s), other synergic resin(s), surfactant(s) or washing aid(s), humectant(s), dispersing agent(s), and other additives known in the art. Exemplary additional washing aids or surfactants for use in the disclosed ink compositions include, but are not limited to, acteylenic-glycol derivatives, such as Surfynol^{®} 440 and Surfynol^{®} 502. These additives can be added to the ink compositions in an amount such that the overall performance of the ink compositions is not adversely affected in any aspect.

The washable ink writing instruments and washable ink compositions in accordance with the disclosure can be better understood in light of the following examples, which are merely intended to illustrate the writing instruments and ink compositions, and are not meant to limit the scope thereof in any way.

### EXAMPLES

The ink compositions of each of the examples was loaded into a marker and tested for minimum erasure force (MEF). The ink compositions were also tested for washability from different fabrics.

### Example 1

A blue ink was prepared by mixing ethanol, deionized water, KW-3 polyvinyl acetal, Triton^{®} X-305, and MP-BL6182 blue in a reaction flask with a propeller mixer for approximately 15 to 30 minutes. Silwet^{®} L-7607 release agent and Surfynol^{®} 440 surfactant were then added to the reaction flask, and mixing was continued for approximately 10 additional minutes. The washing aid, Triton^{®} X-305, is an octylphenol ethoxylate having 30 groups of ethylene oxide per molecule of washing aid, and an HLB value of 17.3. The ingredients were used in the amounts shown below.

| **Component** | **Function** | **Amount** |
|---|---|---|
| MP-BL6182 blue (formaldehyde resin) | Pigment capsule | 10 wt.% |
| Ethanol | Solvent | 62 wt.% |
| KW-3 (20%) | Binder | 13 wt.% |
| Deionized water | Solvent | 2 wt.% |
| Silwet^{®} L-7607 | Release agent | 5 wt.% |
| Surfynol^{®} 440 | Surfactant | 2 wt.% |
| Triton^{®} X-305 (octylphenol ethoxylate) | Washing aid | 6 wt.% |

The ink was loaded into a marker for eraseability and washability testing.

### Example 2

A blue ink was prepared following the procedure of Example 1, except that Triton^{®} X-705 was used instead of Triton^{®} X-305. The washing aid, Triton^{®} X-705, is an octylphenol ethoxylate having 55 groups of ethylene oxide per molecule of washing aid, and an HLB value of 18.5. The ink was loaded into a marker for eraseability and washability testing.

### Example 3

A blue ink was prepared following the procedure of Example 1, except that Ethofat^{®} 242/25 was used instead of Triton^{®} X-305. The washing aid, Ethofat^{®} 242/25, is an ethoxylated aliphatic amine having 15 groups of ethylene oxide per molecule of washing aid, and an HLB value of 12.2. The ink was loaded into a marker for eraseability and washability testing.

### Comparative Example 1

A blue ink was prepared following the procedure of Example 1, except that Ethomeen^{®} 18/12 was used instead of Triton^{®} X-305. The washing aid, Ethomeen^{®} 18/12 (Akzo Nobel, Chicago, IL), is an ethoxylated aliphatic amine having 2 groups of ethylene oxide per molecule of washing aid, and an HLB value of 9.8. The ink was loaded into a marker for eraseability and washability testing.

### Comparative Example 2

A blue ink was prepared following the procedure of Example 1, except that Armeen^{®} 18D was used instead of Triton^{®} X-305. The washing aid, Armeen^{®} 18D (Akzo Nobel, Chicago, IL), is an aliphatic amine having 0 groups of ethylene oxide per molecule of washing aid, and an HLB value of 8. The ink was loaded into a marker for eraseability and washability testing.

### Comparative Example 3

A blue ink was prepared following the procedure of Example 1, except that Laropal^{®} A81 (BASF, Florham Park, NJ) was used instead of Triton^{®} X-305. The washing aid, Laropal^{®} A81, is an aldehyde dispersing resin having 0 groups of ethylene oxide per molecule of washing aid, and an HLB value of 2-3. The ink was loaded into a marker for eraseability and washability testing.

### Example 4

A blue ink was prepared by mixing ethanol, deionized water, KW-3 polyvinyl acetal washable binder, Triton^{®} X-100 and Ethofat^{®} 242/25 washing aids, and MP-BL6182 blue in a reaction flask with a propeller mixer for approximately 15 to 30 minutes. Silwet^{®} L-7607 release agent and Surfynol^{®} 440 surfactant were then added to the reaction flask and mixing was continued for approximately 10 minutes. The washing aid, Triton^{®} X-100, is an octylphenol ethoxylate having 9.5 groups of ethylene oxide per molecule of washing aid and an HLB value of 13.5. The washing aid, Ethofat^{®} 242/25, is an ethoxylated aliphatic amine with 15 moles of ethylene oxide, and an HLB value of 12.2. The colorant, MP series, includes a polymer matrix formed from a formaldehyde resin. The ingredients were used in the amounts shown below.

| **Component** | **Function** | **Amount** |
|---|---|---|
| MP-BL6182 blue (formaldehyde resin) | Pigment capsules | 10 wt.% |
| Ethanol | Solvent | 62 wt.% |
| KW-3 (20%) | Binder | 13 wt.% |
| Deionized water | Solvent | 2 wt.% |
| Silwet^{®} L-7607 | Release agent | 5 wt.% |
| Surfynol^{®} 440 | Surfactant | 2 wt.% |
| Triton^{®} X-100 (octylphenol ethoxylate) | Washing aid | 2 wt.% |
| Ethofat^{®} 242/25 (ethoxylated aliphatic amine) | Washing aid | 4 wt.% |

The ink was loaded into a marker for erasability and washability testing.

### Example 5

The procedure of Example 4 was followed, except that Panax FB 403 red was used instead of MP-BL6182 blue as the pigment capsules to produce a red ink. The pigment capsules, Panax FB, include a polymer matrix formed from a benzoguanamine-formaldehyde resin. The ink was loaded into a marker for erasability and washability testing.

### Comparative Example 4

The procedure of Example 4 was followed, except that Irgalite^{®} CG2 orange 13 (Ciba, Basel, Switzerland) was used instead of MP-BL6182 blue as the pigment capsules to produce an orange ink. The pigment capsules, Irgalite^{®} CG2, include a polymer matrix formed from a sulfonamide/melamine-formaldehyde resin. The ink was loaded into a marker for erasability and washability testing.

### Comparative Example 5

The procedure of Example 4 was followed, except that Lumikol NKW3204C blue (United Mineral & Chemical Corp.) was used instead of MP-BL6182 blue as the pigment capsules. The pigment capsules, Lumikol series, include a polymer matrix formed from styrene/acrylonitrile copolymer resin. The ingredients were used in the amounts shown below.

| **Component** | **Function** | **Amount** |
|---|---|---|
| Lumikol NKW3204C blue | Pigment capsule | 25 wt.% |
| Ethanol | Solvent | 49 wt.% |
| KW-3 (20%) | Binder | 13 wt.% |
| Silwet^{®} L-7607 | Release agent | 5 wt.% |
| Surfynol^{®} 440 | Surfactant | 2 wt.% |
| Triton^{®} X-100 (octylphenol ethoxylate) | Washing aid | 2 wt% |
| Ethofat^{®} 245/25 (ethoxylated aliphatic amine) | Washing aid | 4 wt.% |

The ink was loaded into a marker for erasability and washability testing.

### Comparative Example 6

The procedure of Example 4 was followed, except that Paliogen® Black S 0084 was used instead of MP-BL6182 blue to produce a black ink. Paliogen® Black S 0084 (BASF) is a perylene pigment black 31 (which does not comprise a polymeric matrix of any sort much less in accordance with the invention). The ingredients were used in the amounts shown below.

| **Component** | **Function** | **Amount** |
|---|---|---|
| Paliogen® Black S 0084 | Colorant | 5 wt.% |
| Ethanol | Solvent | 67 wt.% |
| KW-3 (20%) | Binder | 13 wt.% |
| Deionized water | Solvent | 2 wt.% |
| Silwet^{®} L-7607 | Release agent | 5 wt.% |
| Surfynol^{®} 440 | Surfactant | 2 wt.% |
| Triton^{®} X-100 (octylphenol ethoxylate) | Washing aid | 2 wt.% |
| Ethofat^{®} 242/25 (ethoxylated aliphatic amine) | Washing aid | 4 wt.% |

The ink was loaded into a marker for erasability and washability testing.

### Washability Testing Results

The washability of the ink compositions was tested using multifiber fabric pieces (Testfabrics, Inc., West Pittston, PA) containing the desired type of fabric and washed on a typical residential laundry machine. Markers loaded with the test inks were used to mark about 25.4 mm (1 inch) lines on each piece fabric. The marked fabrics were allowed to dry for at least 15 hours before laundering. For washing, the marked fabrics were attached to dummy sheets with safety pins. A washing machine was loaded with 100g of a powder detergent the dummy sheets (about 16 pieces) and test samples to make an about 1.81 kg (4 lb) load. The water level was set to highest capacity, the temperature conditions of the hot/cold cycle was used, and a "normal" wash cycle (about 12 minutes) was used. After washing, the entire load was dried in a typical residential laundry dryer for about 30 minutes under the "normal" setting. The multifiber test fabrics were then analyzed for the appearance of the marking. The results were quantified using the following 5 point scale:

| **1** | **2** | **3** | **4** | **5** |
|---|---|---|---|---|
| No Visible Stain | Slight Stain | Moderate Stain | Severe Stain | Slight to no loss of color. |
| Washed out | Only small traces of markings remain | Large loss of color intensity but markings remain | Moderate loss of color intensity | |

The results of the washability tests are shown in Table 1 below.

**TABLE 1: WASHABILITY TEST RESULTS**

| **Washability From Fabric (5 Point Scale)** | | | | | |
|---|---|---|---|---|---|
| | **Bleached Cotton** | **Acrylic 61** | **Polyester 54** | **Polyester 64** | **Nylon 66** |
| **Example 1** | 1 | 1 | 1 | 1 | 1 |
| **Example 2** | 1 | 1 | 1 | 1 | 1 |
| **Example 3** | 1 | 1 | 1 | 1 | 1 |
| **Comparative Example 1** | 3 | 2 | 4 | 4 | 2 |
| **Comparative Example 2** | 3 | 3 | 2 | 2 | 2 |
| **Comparative Example 3** | 3 | 4 | 3 | 3 | 2 |
| **Example 4** | 1 | 1 | 1 | 1 | 1 |
| **Example 5** | 1 | 1 | 1 | 1 | 1 |
| **Comparative Example 4** | 3 | 4 | 4 | 4 | 3 |
| **Comparative Example 5** | 2 | 2 | 1 | 2 | 1 |
| **Comparative Example 6** | 4 | 4 | 1 | 1 | 2 |

As these results demonstrate, the ink compositions in accordance with the disclosure can be substantially, or even completely removed from a variety of fabrics without leaving a visible stain. The results further demonstrate the importance of both the washing aid and the polymer matrix in producing an ink composition that can be successfully washed from a variety of fabrics.

A comparison of the washability testing for examples 1-5 to comparative examples 1-6 demonstrates that in order to produce an effective washable ink composition both a washing aid and a polymer matrix that are in accordance with the disclosure must be used.

### Eraseability Testing Results

The eraseability of the ink compositions from different whiteboards was tested by measuring the minimum erasure force (MEF) necessary to erase a dry-erase marking by one swipe. For a given whiteboard, two lines were drawn across the length of the surface of the whiteboard with a marker having the ink loaded therein. The minimum mass required to erase the test lines in a single swipe was then determined using minimum erasure force equipment. The MEF equipment included of a string that was attached to an aluminum block eraser pad holder and anchored to a variable speed pulling shaft. The aluminum block having dimensions of 5cm X 4cm X 1cm and weighing about 50g and had an eraser pad attached to one face. The aluminum block was placed at least 25.4 mm (one inch) above the test lines and was loaded with 100g weights. The aluminum block was then drawn perpendicularly across the test lines by the variable speed motor at a speed of about 25.4 ± 2,54 mm/sec (1.0 ± 0.1 inch/sec) to effect erasure of the test lines. If complete erasure was not achieved in one swipe, the load on the aluminum block was increased in increments of 50g and the testing procedure was repeated on a different portion of the test lines. The testing procedure was repeated with increasing increments of weight until the test lines were erased in a single swipe. The minimum weight necessary to effect total erasure of the test lines in one swipe is the MEF for the ink composition on that particular whiteboard surface. The results of the MEF testing are in Table 2.

**TABLE 2: MINIMUM ERASURE FORCE TEST RESULTS**

| **Minimum Erasure Force, g (2 hrs at Room Temperature)** | | |
|---|---|---|
| | **Porcelain Whiteboard** | **Polyester/Melamine Whiteboard** |
| Example 1 | 150 | 250 |
| Example 2 | 700 | 1000 |
| Example 3 | 300 | 600 |
| Comparative Example 1 | 250 | 800 |
| Comparative Example 2 | 200 | 250 |
| Comparative Example 3 | 2000 | 2500 |
| Example 4 | 150 | 250 |
| Example 5 | 200 | 500 |
| Comparative Example 4 | 2000 | 2500 |
| Comparative Example 5 | 600 | 400 |
| Comparative Example 6 | 100 | 150 |

The ink compositions in accordance with the disclosure generally required less or equivalent force to be completely erased than the inks of the comparative examples.

Although the foregoing text is a detailed description of numerous different embodiments of a washable ink composition, the detailed description is to be construed as exemplary only and does not describe every possible embodiment of a washable ink composition on accordance with the disclosure. Consequently, the only limitations which should be placed upon the washable ink compositions in accordance with the disclosure are those which appear in the appended claims.

## Claims

1. A washable ink composition comprising:
(a) at least one pigment capsule comprising a polymer matrix formed of a resin selected from the group consisting of aminoplast resins, epoxy resins, and combinations thereof; and at least one colorant contained in the polymer matrix; and,
(b) at least one washing aid comprising at least 4 ethylene oxide units per molecule of washing aid, wherein the at least one washing aid is selected from the group consisting of alkylphenol ethoxylate derivatives, fatty alcohol ethoxylates, fatty acid ethoxylates, polyethylene glycols, and ethoxylated aliphatic amines.

2. The washable ink composition of claim 1, wherein the resin is an aminoplast resin comprising the reaction product of an aminoplast crosslinker and an aldehyde.

3. The washable ink composition of claim 2, wherein the aminoplast crosslinker is selected from the group consisting of urea, melamine, aniline, ammeline, guanidine, dicyandiamidine, benzoguanamine, alkyl-substituted derivatives thereof, and aryl-substituted derivatives thereof.

4. The washable ink composition of claim 2 or 3, wherein the aldehyde is selected from the group consisting of acrolein, butyraldehyde, formaldehyde, paraformaldehyde, methylhemiformal, butylhemiformal, formaldehyde sodium bisulfite adduct, glyoxal, acetaldehyde, benzaldehyde, furfural, phthalaldehyde, and terephthaldehyde.

5. The washable ink composition of any one of claims 1 to 4, wherein the at least one washing aid comprises from 0.5 wt.% to 20 wt.% of the ink composition.

6. The washable ink composition of any one of claims 1 to 5, wherein the at least one washing aid has a hydrophilic-lipophilic balance (HLB) value of at least 6.

7. The washable ink composition of any one of claims 1 to 5, wherein the at least one washing aid has a hydrophilic-lipophilic balance (HLB) value of at least 12.

8. The washable ink composition of any one of claims 1 to 7, wherein the at least one pigment capsule comprises from 1 wt.% to 40 wt.% percent of the ink composition.

9. The washable ink composition of any one of claims 1 to 8, wherein the at least one colorant is a dye selected from the group consisting of basic dyes, acid dyes, solvent dyes, direct dyes, and fluorescent dyes.

10. The washable ink composition of claim 2, wherein said reaction product is substantially free of repeat units comprising sulfonamides, nitriles, carboxylic acids, carboxylates, and derivatives of carboxylic acids.

11. A washable ink composition comprising:
(a) at least one pigment capsule comprising a polymer matrix formed of a resin selected from the group consisting of aminoplast resins, epoxy resins, and combinations thereof; and at least one colorant contained in the polymer matrix; and,
(b) at least one washing aid having a hydrophilic-lipophilic balance (HLB) value of at least 12.

12. The washable ink composition of claim 11, wherein the resin is an aminoplast resin comprising the reaction product of an aminoplast crosslinker and an aldehyde.

13. The washable ink composition of any one of claims 11 to 12, wherein said reaction product is substantially free of repeat units comprising sulfonamides, nitriles, carboxylic acids, carboxylates, and derivatives of carboxylic acids.

14. The washable ink composition of claim 11, wherein the at least one washing aid is selected from the group consisting of octylphenol ethoxylate derivatives and ethoxylated aliphatic amines.

15. A writing instrument comprising the washable ink composition of claim 11.

## Patentansprüche

1. Auswaschbare Tintenzusammensetzung, umfassend:
(a) mindestens eine Pigmentkapsel, umfassend eine Polymermatrix, die aus einem Harz geformt ist, das aus der Gruppe bestehend aus Aminoplastharzen, Epoxidharzen und Kombinationen davon ausgewählt ist; und mindestens ein Farbmittel, das in der Polymermatrix enthalten ist; und
(b) mindestens ein Waschhilfsmittel, umfassend mindestens 4 Ethylenoxideinheiten pro Molekül Waschhilfsmittel, wobei das mindestens eine Waschhilfsmittel aus der Gruppe bestehend aus Alkylphenolethoxylat-Derivaten, Fettalkoholethoxylaten, Fettsäureethoxylaten, Polyethylenglykolen und ethoxylierten aliphatischen Aminen ausgewählt ist.

2. Auswaschbare Tintenzusammensetzung nach Anspruch 1, wobei das Harz ein Aminoplastharz ist, das das Reaktionsprodukt eines Aminoplast-Vernetzers und eines Aldehyds umfasst.

3. Auswaschbare Tintenzusammensetzung nach Anspruch 2, wobei der Aminoplast-Vernetzer aus der Gruppe bestehend aus Harnstoff, Melamin, Anilin, Ammelin, Guanidin, Dicyandiamidin, Benzoguanamin, alkylsubstituierten Derivaten davon und arylsubstituierten Derivaten davon ausgewählt ist.

4. Auswaschbare Tintenzusammensetzung nach Anspruch 2 oder 3, wobei das Aldehyd aus der Gruppe bestehend aus Acrolein, Butyraldehyd, Formaldehyd, Paraformaldehyd, Methylhalbformal, Butylhalbformal, Formaldehyd-Natriumbisulfit-Addukt, Glyoxal, Acetaldehyd, Benzaldehyd, Furfural, Phthalaldehyd und Terephthalaldehyd ausgewählt ist.

5. Auswaschbare Tintenzusammensetzung nach einem der Ansprüche 1 bis 4, wobei das mindestens eine Waschhilfsmittel 0,5 Gew.-% bis 20 Gew.-% der Tintenzusammensetzung umfasst.

6. Auswaschbare Tintenzusammensetzung nach einem der Ansprüche 1 bis 5, wobei das mindestens eine Waschhilfsmittel einen Wert des Hydrophile-Lipophile-Gleichgewichts (hydrophilic-lipophilic balance, HLB) von mindestens 6 aufweist.

7. Auswaschbare Tintenzusammensetzung nach einem der Ansprüche 1 bis 5, wobei das mindestens eine Waschhilfsmittel einen Wert des Hydrophile-Lipophile-Gleichgewichts (HLB) von mindestens 12 aufweist.

8. Auswaschbare Tintenzusammensetzung nach einem der Ansprüche 1 bis 7, wobei die mindestens eine Pigmentkapsel 1 Gew.-% bis 40 Gew.-% der Tintenzusammensetzung umfasst.

9. Auswaschbare Tintenzusammensetzung nach einem der Ansprüche 1 bis 8, wobei das mindestens eine Farbmittel ein Farbstoff ist, der aus der Gruppe bestehend aus basischen Farbstoffen, sauren Farbstoffen, Lösungsmittelfarbstoffen, Direktfarbstoffen und Fluoreszenzfarbstoffen ausgewählt ist.

10. Auswaschbare Tintenzusammensetzung nach Anspruch 2, wobei das Reaktionsprodukt im Wesentlichen frei von Grundeinheiten ist, die Sulfonamide, Nitrile, Carbonsäuren, Carboxylate und Derivate von Carbonsäuren umfassen.

11. Auswaschbare Tintenzusammensetzung, umfassend:
(a) mindestens eine Pigmentkapsel, umfassend eine Polymermatrix, die aus einem Harz geformt ist, das aus der Gruppe bestehend aus Aminoplastharzen, Epoxidharzen und Kombinationen davon ausgewählt ist; und mindestens ein Farbmittel, das in der Polymermatrix enthalten ist; und
(b) mindestens ein Waschhilfsmittel, das einen Wert des Hydrophile-Lipophile-Gleichgewichts (HLB) von mindestens 12 aufweist.

12. Auswaschbare Tintenzusammensetzung nach Anspruch 11, wobei das Harz ein Aminoplastharz ist, das das Reaktionsprodukt eines Aminoplast-Vernetzers und eines Aldehyds umfasst.

13. Auswaschbare Tintenzusammensetzung nach einem der Ansprüche 11 bis 12, wobei das Reaktionsprodukt im Wesentlichen frei von Grundeinheiten ist, die Sulfonamide, Nitrile, Carbonsäuren, Carboxylate und Derivate von Carbonsäuren umfassen.

14. Auswaschbare Tintenzusammensetzung nach Anspruch 11, wobei das mindestens eine Waschhilfsmittel aus der Gruppe bestehend aus Octylphenolethoxylat-Derivaten und ethoxylierten aliphatischen Aminen ausgewählt ist.

15. Schreibgerät, das die auswaschbare Tintenzusammensetzung nach Anspruch 11 umfasst.

## Revendications

1. Composition d'encre lavable comprenant :
(a) au moins une capsule de pigment comprenant une matrice polymère formée d'une résine sélectionnée dans le groupe consistant en des résines aminoplastes, des résines époxy et des combinaisons de celles-ci ; et au moins un colorant contenu dans la matrice polymère ; et
(b) au moins une aide au lavage comprenant au moins 4 motifs oxyde d'éthylène par molécule d'aide au lavage, la au moins une aide au lavage étant sélectionnée dans le groupe consistant en des dérivés éthoxylates d'alkylphénol, des éthoxylates d'alcools gras, des éthoxylates d'acides gras, des polyéthylène-glycols et des amines aliphatiques éthoxylées.

2. Composition d'encre lavable de la revendication 1, dans laquelle la résine est une résine aminoplaste comprenant le produit de réaction entre un réticulant aminoplaste et un aldéhyde.

3. Composition d'encre lavable de la revendication 2, dans laquelle le réticulant aminoplaste est sélectionné dans le groupe consistant en l'urée, la mélamine, l'aniline, l'amméline, la guanidine, la dicyandiamidine, la benzoguanamine, des dérivés substitués par un alkyle de celles-ci et des dérivés substitués par un aryle de celles-ci.

4. Composition d'encre lavable de la revendication 2 ou 3, dans laquelle l'aldéhyde est sélectionné dans le groupe consistant en l'acroléine, le butyraldéhyde, le formaldéhyde, le paraformaldéhyde, le méthylhémiformal, le butylhémiformal, un adduit de formaldéhyde et de bisulfite de sodium, le glyoxal, l'acétaldéhyde, le benzaldéhyde, le furfural, le phtalaldéhyde et le téréphtaldéhyde.

5. Composition d'encre lavable de l'une quelconque des revendications 1 à 4, dans laquelle la au moins une aide au lavage représente de 0,5 % en poids à 20 % en poids de la composition d'encre.

6. Composition d'encre lavable de l'une quelconque des revendications 1 à 5, dans laquelle la valeur de l'équilibre hydrophile-lipophile (HLB) de la au moins une aide au lavage est au minimum de 6.

7. Composition d'encre lavable de l'une quelconque des revendications 1 à 5, dans laquelle la valeur de l'équilibre hydrophile-lipophile (HLB) de la au moins une aide au lavage est au minimum de 12.

8. Composition d'encre lavable de l'une quelconque des revendications 1 à 7, dans laquelle la au moins une capsule de pigment représente de 1 % en poids à 40 % en poids de la composition d'encre.

9. Composition d'encre lavable de l'une quelconque des revendications 1 à 8, dans laquelle le au moins un colorant est un colorant sélectionné dans le groupe consistant en des colorants basiques, des colorants acides, des colorants à solvant, des colorants directs et des colorants fluorescents.

10. Composition d'encre lavable de la revendication 2, dans laquelle ledit produit de réaction est essentiellement exempt de motifs de répétition comprenant des sulfamides, nitriles, acides carboxyliques, carboxylates et dérivés d'acides carboxyliques.

11. Composition d'encre lavable comprenant :
(a) au moins une capsule de pigment comprenant une matrice polymère formée d'une résine sélectionnée dans le groupe consistant en des résines aminoplastes, des résines époxy et des combinaisons de celles-ci ; et au moins un colorant contenu dans la matrice polymère ; et
(b) au moins une aide au lavage dont la valeur de l'équilibre hydrophile-lipophile (HLB) est au minimum de 12.

12. Composition d'encre lavable de la revendication 11, dans laquelle la résine est une résine aminoplaste comprenant le produit de réaction entre un réticulant aminoplaste et un aldéhyde.

13. Composition d'encre lavable de l'une quelconque des revendications 11 à 12, dans laquelle ledit produit de réaction est essentiellement exempt de motifs de répétition comprenant des sulfamides, nitriles, acides carboxyliques, carboxylates et dérivés d'acides carboxyliques.

14. Composition d'encre lavable de la revendication 11, dans laquelle la au moins une aide au lavage est sélectionnée dans le groupe consistant en des dérivés éthoxylates d'octylphénol et des amines aliphatiques éthoxylées.

15. Instrument d'écriture comprenant la composition d'encre lavable de la revendication 11.
